# EUROPÄISCHE PATENTSCHRIFT

(11) **EP 3 157 793 B1**
(45) Veröffentlichungstag und Bekanntmachung des Hinweises auf die Patenterteilung: **22.09.2021**
(21) Anmeldenummer: 15724563.0
(22) Anmeldetag: 13.05.2015
(51) Int. Cl.: B60W 30/18, G01S 13/93, B60W 30/095

(54) **BESTIMMEN EINES ZUSTANDS EINES FAHRZEUGS UND UNTERSTÜTZUNG EINES FAHRERS BEIM FÜHREN DES FAHRZEUGS**
DETERMINING A STATE OF A VEHICLE AND ASSISTING A DRIVER IN DRIVING THE VEHICLE
DÉTERMINATION DE L'ÉTAT D'UN VÉHICULE ET ASSISTANCE À LA CONDUITE D'UN CONDUCTEUR DUDIT VÉHICULE

(30) Priorität: 17.06.2014 DE 102014211607
(43) Veröffentlichungstag der Anmeldung: 26.04.2017
(73) Patentinhaber: Volkswagen Aktiengesellschaft, 38440 Wolfsburg (DE)
(72) Erfinder: PASCHEKA, Patrick, 2582 EN Den Haag (NL)
(86) Internationale Anmeldenummer: PCT/EP2015/060600
(87) Internationale Veröffentlichungsnummer: WO 2015/193038

(56) Entgegenhaltungen:
- EP-A1- 2 026 099
- DE-A1-102005 039 701
- DE-A1-102008 022 199

## Beschreibung

Die vorliegende Erfindung betrifft ein Verfahren und eine Vorrichtung, um einen Zustand eines Fahrzeugs zu bestimmen und um einen Fahrer beim Führen eines Fahrzeugs abhängig von diesem Zustand zu unterstützen.

Die DE 10 2008 022 199 A1 beschreibt ein Parkunterstützungssystem. Dabei wird die Breite eines Zielraums als die Erfassungsreichweite eines Ultraschallsensors geschätzt, wenn der Ultraschallsensor keine Hindernisse erfasst. Die Länge des Zielraumes wird abhängig von einer Radgeschwindigkeitssensorausgabe geschätzt.

Die US 2013/0194110 A1 beschreibt ein Head-Up-Display zur Darstellung weiterer Informationen für den Fahrer eines Fahrzeugs.

Die US 2013/0338868 A1 offenbart einen Spurwechselassistent.

Systeme und Verfahren, um bei bzw. vor einem Spurwechsel vor einem auf der Nachbarspur fahrenden Fahrzeug zu warnen, sind nach dem Stand der Technik bekannt. Dazu wird der Verkehrsraum vor und hinter dem Fahrzeug in der Regel mit Hilfe von einer Radarsensorik überwacht. Sofern sich Fahrzeuge innerhalb der Reichweite der entsprechenden Sensorik befinden, kann beispielsweise das Risiko bewertet werden, dass das eigene Fahrzeug beispielsweise bei einem Spurwechsel mit einem dieser Fahrzeuge zusammenstößt oder einem dieser Fahrzeuge zu nahe kommt. Mit anderen Worten sind die bekannten Systeme und Verfahren durch die begrenzte Reichweite ihrer Sensorik beschränkt, da sie nur vor Fahrzeugen warnen, welche sich innerhalb der Reichweite der Sensorik befinden.

Die vorliegende Erfindung stellt sich die Aufgabe, das vorab beschriebene Problem der begrenzten Reichweite der Sensorik zumindest abzumildern.

Erfindungsgemäß wird diese Aufgabe durch ein Verfahren zum Bestimmen eines Zustands eines Fahrzeugs nach Anspruch 1, durch ein Verfahren zur Unterstützung eines Fahrers beim

Führen eines Fahrzeugs nach Anspruch 9, durch eine Vorrichtung zur Bestimmung eines Zustands eines Fahrzeugs nach Anspruch 10 und durch ein Fahrzeug nach Anspruch 12 gelöst. Die abhängigen Ansprüche definieren bevorzugte und vorteilhafte Ausführungsformen der vorliegenden Erfindung.

Im Rahmen der vorliegenden Erfindung wird ein Verfahren zum Bestimmen eines Zustands eines Fahrzeugs, welches einen Sensor zum Erfassen eines weiteren Fahrzeugs umfasst, bereitgestellt. Das Verfahren umfasst folgende Schritte:
- Bestimmen einer aktuellen Geschwindigkeit des Fahrzeugs.
- Bestimmen des Zustands des Fahrzeugs in Abhängigkeit von einer Reichweite des Sensors und der vorab bestimmten aktuellen Geschwindigkeit des Fahrzeugs.

Indem der Zustand des Fahrzeugs abhängig von der Reichweite und der aktuellen Geschwindigkeit des Fahrzeugs bestimmt wird, wird der Zustand des Fahrzeugs vorteilhafterweise auch dann bestimmt, wenn sich kein weiteres Fahrzeug innerhalb der Reichweite des Sensors befindet.

Der Zustand des Fahrzeugs nimmt dabei die Werte kritisch und unkritisch an. Der Zustand kritisch liegt dabei dann vor, wenn eine Wahrscheinlichkeit eines Zusammenstoßes des Fahrzeugs mit einem vor oder hinter dem Fahrzeug (außerhalb der Sensorreichweite) fahrenden weiteren Fahrzeug über einem vorbestimmten Schwellenwert liegt. Der Zustand wird als unkritisch erachtet, wenn der Zustand nicht kritisch ist, d.h. wenn die Wahrscheinlichkeit des Zusammenstoßes des Fahrzeugs mit dem weiteren Fahrzeug nicht oberhalb des vorbestimmten Schwellenwerts liegt.

Beispielsweise kann zur Bestimmung des Zustands überprüft werden, ob von einem weiteren Fahrzeug, welches z.B. knapp außerhalb der Reichweite des Sensors hinter dem Fahrzeug fährt, ein Mindestabstand zu dem Fahrzeug unterschritten würde oder ob dieses weitere Fahrzeug länger als zulässig in einen geschwindigkeitsabhängigen Mindestabstand zu dem Fahrzeug eintauchen würde. In ähnlicher Weise kann zur Bestimmung des Zustands überprüft werden, ob das Fahrzeug einen Mindestabstand zu einem weiteren Fahrzeug unterschreiten würde, welches knapp außerhalb der Reichweite des Sensors vor dem Fahrzeug fährt, oder ob das Fahrzeug länger als zulässig in einen geschwindigkeitsabhängigen Mindestabstand zu dem weiteren Fahrzeug eintauchen würde. Wenn dies der Fall ist, wenn also das weitere Fahrzeug den Mindestabstand unterschreiten würde oder länger als zulässig in den geschwindigkeitsabhängigen Mindestabstand eintauchen würde oder wenn das Fahrzeug selbst den Mindestabstand unterschreiten würde oder länger als zulässig in den geschwindigkeitsabhängigen Mindestabstand eintauchen würde, könnte der Zustand des Fahrzeugs als kritisch bestimmt werden.

Gemäß einer bevorzugten erfindungsgemäßen Ausführungsform werden Messwerte des Sensors ausgewertet. Bei dieser Ausführungsform wird der Zustand nur dann abhängig von der Reichweite des Sensors bestimmt, wenn anhand der ausgewerteten Messwerte kein weiteres Fahrzeug erfasst wird, welches vor bzw. hinter dem Fahrzeug in derselben Richtung wie das Fahrzeug auf einer benachbarten Spur rechts bzw. links fährt.

Wenn also ein Spurwechsel auf die benachbarte rechte (linke) Spur geplant ist, wird mittels des Sensors überprüft, ob sich vor bzw. hinter dem Fahrzeug auf der benachbarten rechten (linken) Spur ein Fahrzeug befindet. Wenn mit dem Sensor kein weiteres Fahrzeug vor dem Fahrzeug auf der benachbarten rechten (linken) Spur erfasst wird, wird abhängig von der Reichweite des Sensors der Zustand bestimmt. In ähnlicher Weise wird, wenn mit dem Sensor kein weiteres Fahrzeug hinter dem Fahrzeug auf der benachbarten rechten (linken) Spur erfasst wird, abhängig von der Reichweite des Sensors der Zustand bestimmt. Dabei gilt der Zustand des Fahrzeugs dann als kritisch, wenn der Zustand bei einer der beiden Bestimmungen als kritisch eingestuft wurde.

Die Reichweite kann dem Fahrzeug bekannt sein, indem die Reichweite als eine Konstante im Fahrzeug abgespeichert ist. Es ist allerdings auch möglich, dass die Reichweite beispielsweise abhängig von der Straße, auf welcher das Fahrzeug aktuell fährt, bestimmt wird.

Die Bestimmung der Reichweite bietet den Vorteil, dass Beschaffenheiten der Straße oder Besonderheiten des eingesetzten Sensors vorteilhafterweise berücksichtigt werden können.

Insbesondere wird die Reichweite in Abhängigkeit von einer Kontur bzw. Grenze eines Erfassungsbereichs des Sensors bzw. eines Erfassungsbereichs mehrerer Sensoren bestimmt. Dazu wird für jede Fahrspur einer von dem Fahrzeug befahrenen Straße, auf welcher sich in derselben Richtung wie das Fahrzeug weitere Fahrzeuge bewegen, jeweils ein Schnittpunkt vor und ein Schnittpunkt nach dem Fahrzeug bestimmt. Dabei schneiden sich in jedem Schnittpunkt die Mittellinie der entsprechenden Fahrspur und die Kontur bzw. Grenze des Erfassungsbereichs des Sensors bzw. der Sensoren. Die Reichweite kann dann als der Abstand zwischen dem Fahrzeug und dem jeweiligen Schnittpunkt bestimmt werden. Bei dieser Ausführungsform hängt die Reichweite unter anderem von der Richtung ab, in welcher das weitere Fahrzeug vor oder hinter dem Fahrzeug gesucht wird.

Bei dieser erfindungsgemäßen Ausführungsform ist somit die Reichweite von der Fahrbahn bzw. vom dem Verlauf der Fahrbahn abhängig und davon abhängig, ob die Reichweite vor oder nach dem Fahrzeug betrachtet wird. Diese Ausführungsform berücksichtigt vorteilhafterweise sowohl die möglicherweise unterschiedliche Reichweite des Sensors bei der Überwachung des Bereiches vor dem Fahrzeug und des Bereiches hinter dem Fahrzeug als auch Kurven der Straße.

Bei einer erfindungsgemäßen Ausführungsform wird der Zustand des Fahrzeugs zusätzlich abhängig von einer Mindestgeschwindigkeit bestimmt, welche für Fahrzeuge gilt, die sich auf der von dem Fahrzeug befahrenen Straße bewegen.

Bei Berücksichtigung der Mindestgeschwindigkeit kann der Zustand des Fahrzeugs beispielsweise dadurch bestimmt werden, dass in einem Abstand, welcher der Reichweite des Sensors entspricht, vor dem Fahrzeug ein virtuelles Fahrzeug angenommen wird, welches mit der Mindestgeschwindigkeit fährt. Abhängig von dieser Mindestgeschwindigkeit, von der Geschwindigkeit des Fahrzeugs und der Reichweite des Sensors (welche abhängig von der Fahrbahn sein kann, auf welcher das virtuelle Fahrzeug angenommen wird) kann dann berechnet werden, ob das Fahrzeug einen vorbestimmten Mindestabstand zu dem weiteren Fahrzeug unterschreiten wird. Der Zustand wird dann als kritisch bestimmt, wenn dieser Mindestabstand unterschritten wird. Zur Berechnung kann eine vorbestimmte (negative) Beschleunigung des Fahrzeugs und eine Reaktionszeit des Fahrers des Fahrzeugs angenommen werden. Der bei der Berechnung verwendete Mindestgeschwindigkeit kann anhand eines Produkts aus der geltenden Mindestgeschwindigkeit mit einem Faktor (z.B. < 1) oder anhand einer Differenz der geltenden Mindestgeschwindigkeit abzüglich einer Konstanten berechnet werden, um anhand dieses Faktors oder dieser Konstanten eine gewisse Sicherheitsschwelle zu haben. Als geltende Mindestgeschwindigkeit kann beispielsweise auf der Autobahn 80 km/h angenommen werden, während innerorts auch eine Mindestgeschwindigkeit von 0 km/h für das virtuelle Fahrzeug angenommen werden kann.

Bei einer weiteren erfindungsgemäßen Ausführungsform wird der Zustand des Fahrzeugs zusätzlich abhängig von einer zulässigen Höchstgeschwindigkeit bestimmt, welche für Fahrzeuge gilt, die sich auf der von dem Fahrzeug befahrenen Straße bewegen.

Gemäß dieser Ausführungsform kann der Zustand des Fahrzeugs abhängig von der zulässigen Höchstgeschwindigkeit, von der Reichweite des Sensors und von der aktuellen Geschwindigkeit des Fahrzeugs bestimmt werden. Dabei kann die bei der Bestimmung verwendete Höchstgeschwindigkeit um einen vorbestimmten Prozentsatz und/oder um einen vorbestimmten Absolutwert höher als die eigentlich zulässige Höchstgeschwindigkeit angesetzt werden, um Überschreitungen der zulässigen Höchstgeschwindigkeit entsprechend zu berücksichtigen. Darüber hinaus kann die verwendete Höchstgeschwindigkeit auch fahrspurabhängig sein, sofern beispielsweise auf einer Autobahn für verschiedene Fahrspuren unterschiedliche Höchstgeschwindigkeiten existieren.

Zur Bestimmung des Zustands des Fahrzeugs abhängig von der zulässigen Höchstgeschwindigkeit wird insbesondere angenommen, dass sich in einem Abstand, welcher der Reichweite des Sensors entspricht, hinter dem Fahrzeug ein virtuelles Fahrzeug befindet, welches mit der Höchstgeschwindigkeit fährt. Abhängig von der Höchstgeschwindigkeit, von der aktuellen Geschwindigkeit des Fahrzeugs und der Reichweite des Sensors in Richtung des virtuellen Fahrzeugs kann dann berechnet werden, ob das virtuelle Fahrzeug einen vorbestimmten Mindestabstand zu dem Fahrzeug unterschreiten wird. Wenn dies der Fall sein sollte, wird der Zustand des Fahrzeugs als kritisch eingestuft.

Zur Bestimmung des Zustands des Fahrzeugs abhängig von der Höchstgeschwindigkeit kann beispielsweise angenommen werden, dass das virtuelle Fahrzeug nach einer vorbestimmten Reaktionszeit eine vorbestimmte (negative) Beschleunigung aufweist und/oder dass das Fahrzeug nach einer vorbestimmten Reaktionszeit eine vorbestimmte (positive) Beschleunigung aufweist. Dann kann der Verlauf des Abstands zwischen dem virtuellen Fahrzeug und dem Fahrzeug über der Zeit abhängig von der Reichweite (dem angenommenen aktuellen Abstand zwischen dem virtuellen Fahrzeug und dem Fahrzeug), von der Höchstgeschwindigkeit (der angenommenen Geschwindigkeit des virtuellen Fahrzeugs), von der aktuellen Geschwindigkeit des Fahrzeugs, von der angenommenen Reaktionszeit des Fahrers des virtuellen Fahrzeugs und von der angenommenen negativen Beschleunigung des virtuellen Fahrzeugs nach der Reaktionszeit bestimmt werden. Anhand des Verlaufs des Abstands über der Zeit kann dann der minimale Abstand bestimmt werden. Wenn dieser unterhalb eines vorbestimmten Mindestabstands liegt, wird der Zustand des Fahrzeugs als kritisch angenommen.

Bei den vorab beschriebenen Ausführungsformen wird quasi der schlimmste Fall angenommen, dass sich gerade außerhalb der Reichweite des Sensors ein weiteres Fahrzeug befindet, welches mit der Höchstgeschwindigkeit fährt, wenn es sich hinter dem Fahrzeug befindet, und welches mit der Mindestgeschwindigkeit fährt, wenn es sich vor dem Fahrzeug befindet. Nur wenn auch bei Annahme dieses schlimmsten Falls keine Unterschreitung des Mindestabstands zwischen dem Fahrzeug und dem weiteren Fahrzeug droht, wird beispielsweise bei einem geplanten Spurwechsel der Zustand des Fahrzeugs als unkritisch eingestuft.

Wenn mit dem Sensor ein weiteres Fahrzeug vor oder hinter dem Fahrzeug auf einer zu der von dem Fahrzeug befahrenen Fahrspur benachbarten Fahrspur erfasst wird, wird der Zustand des Fahrzeugs (auch) abhängig von diesem weiteren Fahrzeug bestimmt. Dazu werden der Abstand zwischen dem Fahrzeug und dem weiteren Fahrzeug und eine Geschwindigkeit des weiteren Fahrzeugs erfasst. Der Zustand des Fahrzeugs wird dann abhängig von der aktuellen Geschwindigkeit des Fahrzeugs, von der erfassten Geschwindigkeit des weiteren Fahrzeugs und von dem erfassten Abstand bestimmt.

Gemäß dieser Ausführungsform wird beispielsweise vor einem Spurwechsel in einem ersten Schritt überprüft, ob mit dem Sensor vor dem Fahrzeug auf einer Fahrspur, auf welche gewechselt werden soll, ein weiteres Fahrzeug erfasst wird. Wenn dies der Fall ist, wird anhand dieses weiteren Fahrzeugs der Zustand des Fahrzeugs bestimmt. Wenn dies nicht der Fall ist, wird anhand des vor dem Fahrzeug fahrenden (stehenden) virtuellen Fahrzeugs der Zustand des Fahrzeugs bestimmt. Genauso wird vor dem Spurwechsel in einem zweiten Schritt überprüft, ob mit dem Sensor hinter dem Fahrzeug auf der Fahrspur ein weiteres Fahrzeug erfasst wird. Wenn dies der Fall ist, wird anhand dieses weiteren Fahrzeugs der Zustand des Fahrzeugs bestimmt. Wenn dies nicht der Fall ist, wird anhand des hinter dem Fahrzeug fahrenden virtuellen Fahrzeugs der Zustand des Fahrzeugs bestimmt. Der Zustand des Fahrzeugs gilt nur dann als unkritisch, wenn der Zustand des Fahrzeugs bei beiden Schritten als unkritisch eingestuft wird. Sonst wird der Zustand des Fahrzeugs als kritisch bestimmt.

Im Rahmen der vorliegenden Erfindung wird auch ein Verfahren zur Unterstützung eines Fahrers beim Führen eines Fahrzeugs bereitgestellt. Dabei wird ein Zustand des Fahrzeugs mit einer Ausführungsform des vorab beschriebenen Verfahrens zum Bestimmen des Zustands des Fahrzeugs bestimmt. Die Unterstützung des Fahrers findet dann abhängig von dem bestimmten Zustand des Fahrzeugs statt.

Das Verfahren zur Unterstützung des Fahrers beim Führen des Fahrzeugs kann beispielsweise bei einem Spurwechsel des Fahrzeugs eingesetzt werden. Wenn der Zustand des Fahrzeugs als kritisch bestimmt wird, kann beispielsweise eine Warnung für den Fahrer erzeugt werden oder der Fahrer kann daran gehindert werden, den Spurwechsel durchzuführen.

Im Rahmen der vorliegenden Erfindung wird auch eine Vorrichtung zur Bestimmung eines Zustands eines Fahrzeugs bereitgestellt. Dabei umfasst die Vorrichtung einen Sensor, um ein weiteres Fahrzeug vor oder hinter dem Fahrzeug zu erfassen, und eine Steuerung. Die Steuerung ist ausgestaltet, um zum einen eine Geschwindigkeit des Fahrzeugs zu bestimmen und um zum anderen den Zustand abhängig von einer Reichweite des Sensors und der Geschwindigkeit zu bestimmen.

Die Vorteile der erfindungsgemäßen Vorrichtung entsprechen im Wesentlichen den Vorteilen des Verfahrens zum Bestimmen eines Zustands eines Fahrzeugs, welche vorab im Detail ausgeführt sind, so dass hier auf eine Wiederholung verzichtet wird.

Darüber hinaus kann die erfindungsgemäße Vorrichtung zur Durchführung aller Ausführungsformen zum einen des Verfahrens zum Bestimmen eines Zustands eines Fahrzeugs und zum anderen des Verfahren zur Unterstützung eines Fahrers beim Führen eines Fahrzeugs ausgestaltet sein.

Schließlich wird im Rahmen der vorliegenden Erfindung ein Fahrzeug bereitgestellt, welches eine erfindungsgemäße Vorrichtung umfasst.

Die vorliegende Erfindung ist insbesondere für Kraftfahrzeuge geeignet. Selbstverständlich ist die vorliegende Erfindung nicht auf diesen bevorzugten Anwendungsbereich eingeschränkt, da die vorliegende Erfindung zumindest prinzipiell auch bei Schiffen und Flugzeugen sowie gleisgebundenen oder spurgeführten Fahrzeugen einsetzbar ist.

Im Folgenden wird die vorliegende Erfindung anhand bevorzugter erfindungsgemäßer Ausführungsformen mit Bezug zu den Figuren im Detail beschrieben.
Fig. 1 zeigt eine Situation, in welcher ein weiteres Fahrzeug einem Fahrzeug innerhalb der Reichweite des Sensors folgt.
Fig. 2 zeigt eine erfindungsgemäße Situation, in welcher innerhalb der Reichweite des Sensors kein weiteres Fahrzeug einem Fahrzeug folgt.
Fig. 3 stellt schematisch eine erfindungsgemäße Bestimmung einer Reichweite von Sensoren zu einem virtuellen Fahrzeugs dar.
Fig. 4 stellt schematisch eine erfindungsgemäße Bestimmung einer Reichweite des Sensors zu einem virtuellen Fahrzeug in einer anderen Situation dar.
In Fig. 5 ist schematisch in Form eines Blockdiagramms dargestellt, wie erfindungsgemäß ein Zustand eines Fahrzeugs bestimmt wird.
Fig. 6 stellt schematisch ein erfindungsgemäßes Fahrzeug mit einer erfindungsgemäßen Vorrichtung dar.

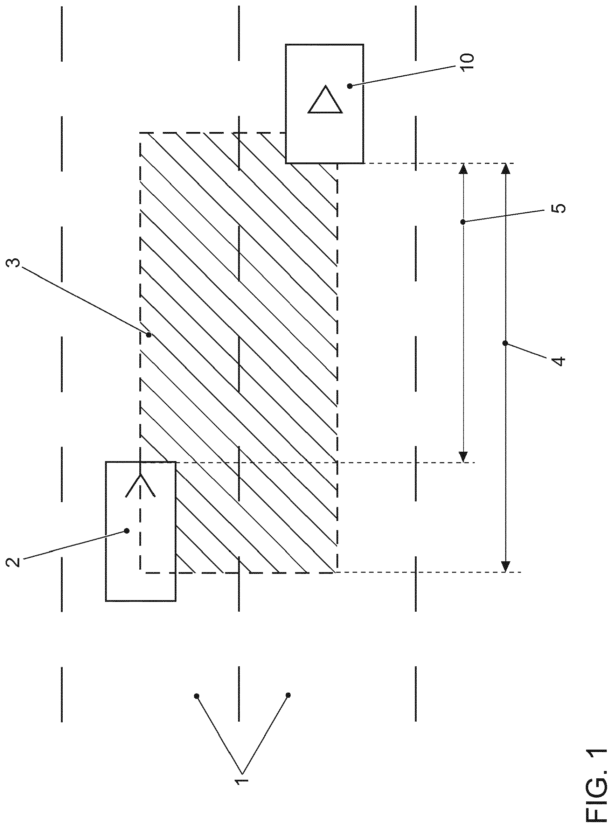

In der in Fig. 1 dargestellten Situation befährt ein Fahrzeug 10 einen rechten Fahrstreifen 1 (Fahrspur) einer Autobahn. Mit Hilfe eines nach hinten ausgerichteten Sensors (in Fig. 1 nicht dargestellt) wird hinter dem Fahrzeug 10 auf dem linken Fahrstreifen 1 (vom Fahrzeug 10 her gesehen) ein weiteres Fahrzeug 2 erfasst, welches daher in einem Erfassungsbereich 3 des Sensors liegt. Anhand von Messergebnissen des Sensors kann ein Abstand 5 zwischen dem weiteren Fahrzeug 2 und dem Fahrzeug 10 und eine Geschwindigkeit des weiteren Fahrzeugs 2 erfasst werden. Abhängig von dem Abstand 5, der Geschwindigkeit des weiteren Fahrzeugs 2 und der aktuellen Geschwindigkeit des Fahrzeugs 10 kann dann beispielsweise unter Berücksichtigung einer Reaktionszeit des Fahrers des weiteren Fahrzeugs 2 und einer (negativen) Beschleunigung des weiteren Fahrzeugs 2 nach der Reaktionszeit der zeitliche Verlauf des Abstands 5 berechnet werden. Anhand des zeitlichen Verlaufs des Abstands 5 lässt sich bestimmen, ob das Minimum des Abstands 5 unterhalb eines Mindestabstands liegt oder ob ein geschwindigkeitsabhängiger Mindestabstand zwischen dem Fahrzeug 10 und dem weiteren Fahrzeug 2 länger als vorgeschrieben unterschritten wird. Wenn dies der Fall ist (d. h. das Minimum des Abstands 5 liegt unterhalb des Mindestabstands oder der geschwindigkeitsabhängige Mindestabstand wird länger als vorgeschrieben unterschritten), wird ein Zustand des Fahrzeugs 10 als kritisch eingestuft, so dass beispielsweise der Fahrer des Fahrzeugs 10 vor einem Spurwechsel auf die linke Fahrspur 1 gewarnt würde oder ein automatischer Spurwechselassistent des Fahrzeugs 10 die Freigabe für den Spurwechsel verweigern würde.

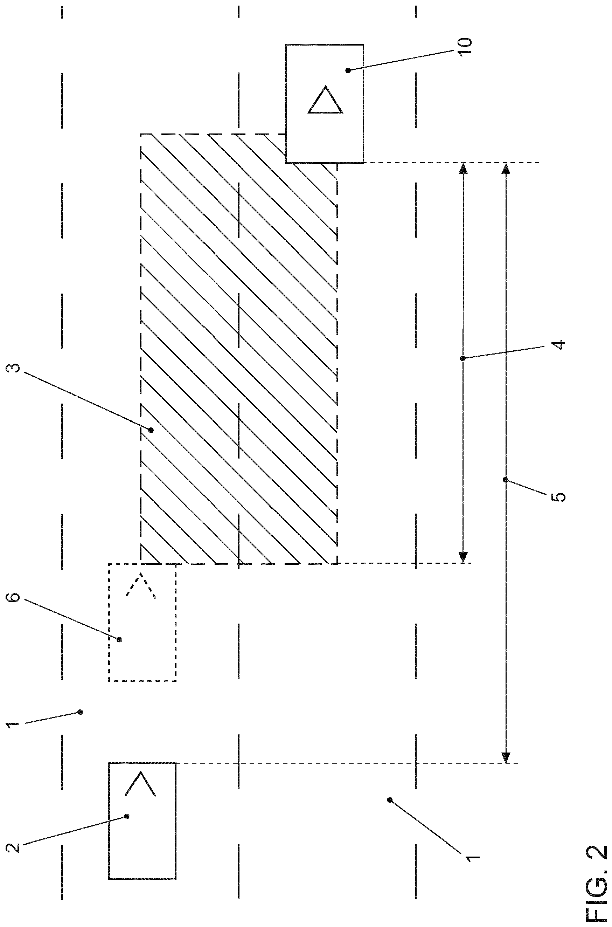

Im Unterschied zu der Situation der Fig. 1 befindet sich das weitere Fahrzeug 2 hinter dem Fahrzeug 10 bei der in Fig. 2 dargestellten Situation außerhalb des Erfassungsbereichs 3 des Sensors. Daher ist der Abstand 5 zwischen dem Fahrzeug 10 und dem weiteren Fahrzeug 2 größer als die Reichweite 4 des Sensors. In dieser Situation würde ein Spurwechselassistent nach dem Stand der Technik den Zustand als unkritisch ansehen oder den Zustand des Fahrzeugs nicht bestimmen.

Erfindungsgemäß wird ein virtuelles Fahrzeug 6 angenommen, welches sich in einem Abstand, welcher der Reichweite 4 des Sensors entspricht, hinter dem Fahrzeug 10 befindet. Als Geschwindigkeit des virtuellen Fahrzeugs 6 wird die aktuell zulässige Höchstgeschwindigkeit für diejenige Fahrspur, auf welcher das virtuelle Fahrzeug 6 angenommen wird, vorausgesetzt. Dabei kann als die Geschwindigkeit des virtuellen Fahrzeugs 6 die zulässige Höchstgeschwindigkeit um einen konstanten Wert vergrößert oder mit einem Faktor (> 1) multipliziert werden.

Anhand des virtuellen Fahrzeugs 6 wird nun der Zustand des Fahrzeugs 10 bestimmt, wie es vorab für die in Fig. 1 dargestellte Situation beschrieben ist. Dabei ersetzt das virtuelle Fahrzeug 6 das weitere Fahrzeug 2, und als Abstand zwischen dem virtuellen bzw. weiteren Fahrzeug und dem Fahrzeug 10 wird die Reichweite 4 des Sensors angenommen. Als Geschwindigkeit des virtuellen bzw. weiteren Fahrzeugs wird die eventuell erhöhte Höchstgeschwindigkeit vorausgesetzt, wie es vorab beschrieben ist.

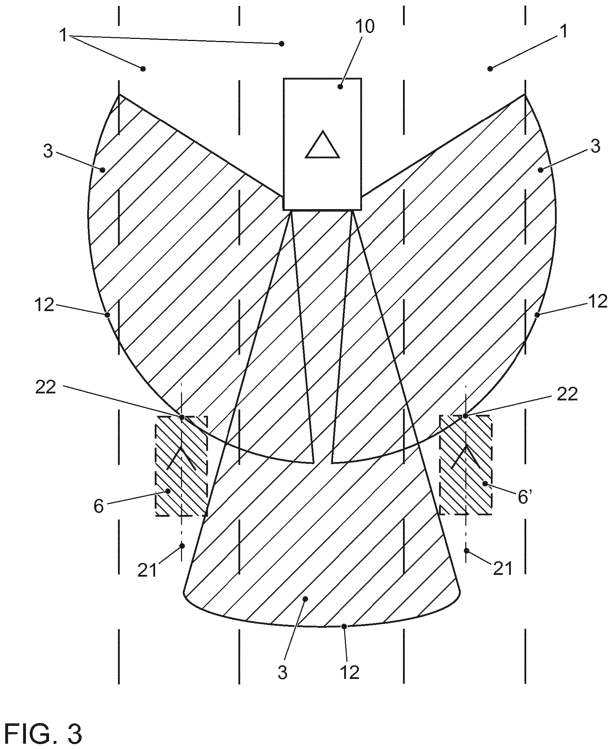

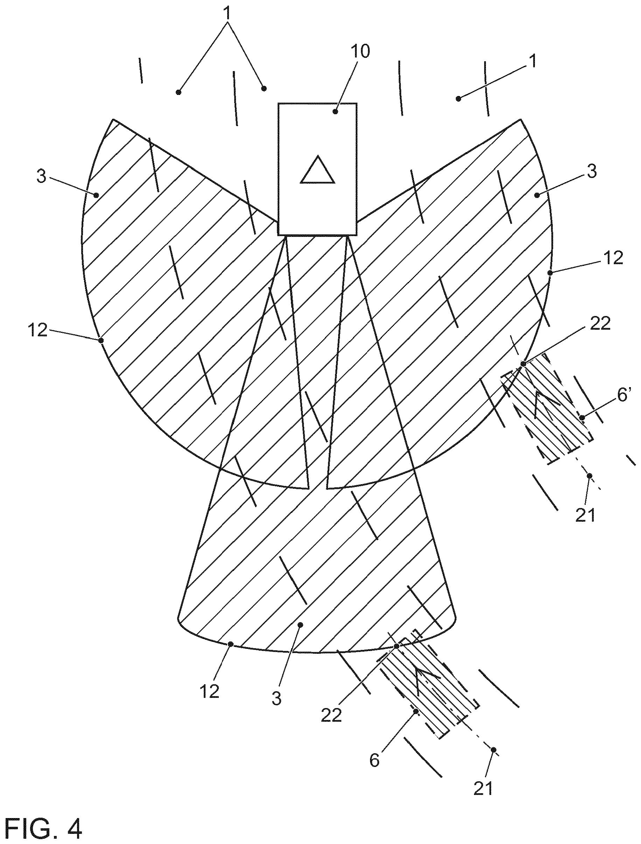

Im Normalfall wird der Zustand des Fahrzeugs 10 mit einer dem Fahrzeug 10 bekannten Konstante für die Reichweite 4 des Sensors bestimmt. Erfindungsgemäß kann die Reichweite auch genauer ermittelt werden, wie es in Fig. 3 und Fig. 4 dargestellt ist.

Man erkennt in Fig. 3, dass der Erfassungsbereich 3 von nach hinten gerichteten Sensormitteln des Fahrzeugs 10 sich aus drei sich teilweise überschneidenden Einzelerfassungsbereichen ergibt. Zur Bestimmung der Reichweite wird nun ein Schnittpunkt 22 zwischen einer Mittellinie 21 einer Fahrspur 1, welche benachbart zu derjenigen Fahrspur 1 liegt, auf welcher das Fahrzeug 10 aktuell fährt, und einer Kontur bzw. Grenze 12 des Erfassungsbereichs 3 bestimmt. Als der Abstand zwischen dem virtuellen Fahrzeug 6 (linke Fahrspur) oder dem virtuellen Fahrzeug 6' (rechte Fahrspur) und dem Fahrzeug 10 wird der Abstand zwischen dem Fahrzeug 10 und dem jeweiligen Schnittpunkt 22 angenommen.

Im Unterschied zu Fig. 3 ist in Fig. 4 ein Kurvenabschnitt einer Autobahn dargestellt. Man erkennt, dass in diesem Fall der Abstand zwischen dem Fahrzeug 10 und dem Schnittpunkt 22 auf der rechten Fahrspur deutlich geringer ist, als der Abstand zwischen dem Fahrzeug 10 und dem Schnittpunkt 22 auf der linken Fahrspur. Daher würde der Zustand des Fahrzeugs 10 bei einem geplanten Spurwechsel auf die rechte Fahrbahn eher als kritisch eingestuft werden, als bei einem geplanten Spurwechsel auf die linke Fahrbahn.

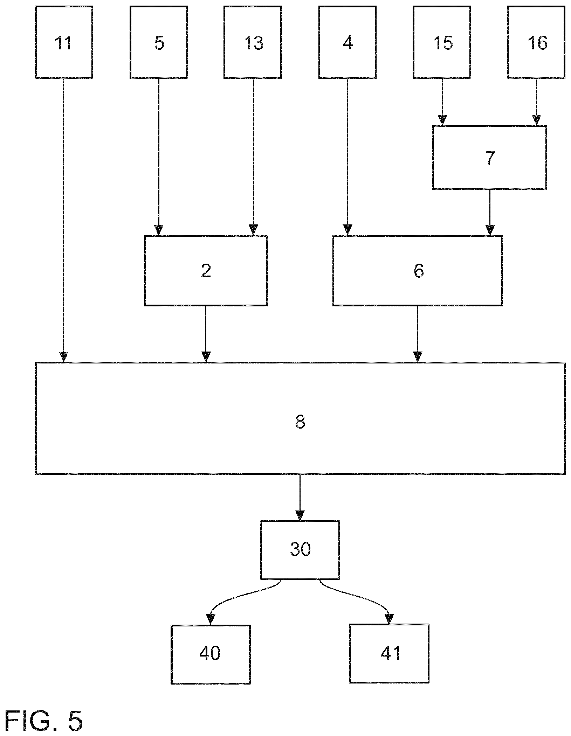

In Fig. 5 ist schematisch in Form eines Blockdiagramms dargestellt, wie der Zustand des Fahrzeugs bestimmt wird.

Zum einen wird Steuermitteln 8 des Fahrzeugs 10 die aktuelle Geschwindigkeit 11 des Fahrzeugs 10 bereitgestellt. Wenn hinter dem Fahrzeug 10 mit dem Sensor ein weiteres Fahrzeug 2 erfasst wird, werden den Steuermitteln 8 der Abstand 5 zwischen dem Fahrzeug 10 und dem weiteren Fahrzeug 2 sowie die Geschwindigkeit 13 des weiteren Fahrzeugs 2 zugeführt. Wenn dagegen hinter dem Fahrzeug 10 mit dem Sensor kein weiteres Fahrzeug 2 erfasst wird, werden den Steuermitteln 8 die Sensorreichweite 4 und die Geschwindigkeit 7 eines virtuellen Fahrzeugs 6 bereitgestellt. Dabei wird die Geschwindigkeit 7 des virtuellen Fahrzeugs 6 anhand einer zulässigen Höchstgeschwindigkeit, wie Sie beispielsweise mit Hilfe einer Verkehrszeichenerkennung des Fahrzeugs 10 erfasst wird, und anhand von Sicherheitsparametern 16, mit welchen die Höchstgeschwindigkeit 15 beaufschlagt wird, berechnet. Die Sicherheitsparameter 16 können dabei einer konstanten Geschwindigkeitsabweichung und/oder einer relativen Geschwindigkeitsabweichung entsprechen. Anhand der Sicherheitsparameter 16 wird berücksichtigt, dass viele Verkehrsteilnehmer die zulässige Höchstgeschwindigkeit um einen konstanten und/oder relativen Betrag überschreiten.

Die Steuermittel 8 berechnen anhand der aktuellen Geschwindigkeit 11 des Fahrzeugs 10 und anhand des Abstands 5 und der Geschwindigkeit 13 des weiteren Fahrzeugs 2 oder anhand der Sensorreichweite 4 und der Geschwindigkeit 7 des virtuellen Fahrzeugs 6 den Zustand 30 des Fahrzeugs 10. Wenn dabei der Zustand 30 des Fahrzeugs 10 als kritisch eingestuft wird, wird entweder eine Warneinrichtung 40 des Fahrzeugs 10 aktiviert, um den Fahrer des Fahrzeugs 10 vor einem Spurwechsel zu warnen, oder ein Spurwechselassistenzsystem 41 des Fahrzeugs 10 verweigert die Freigabe zum Spurwechsel.

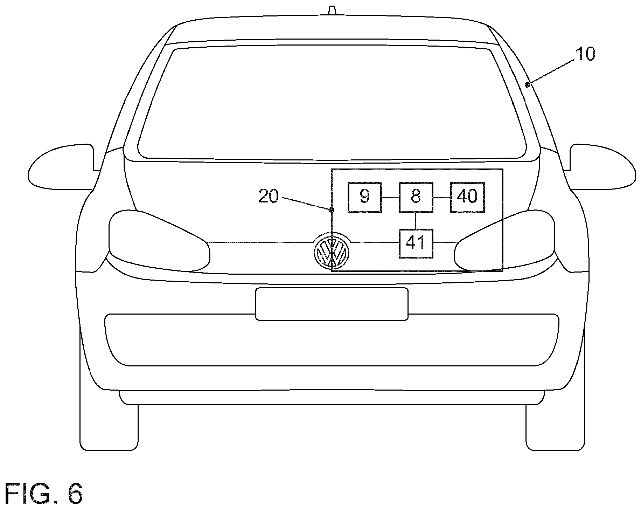

In Fig. 6 ist schematisch ein erfindungsgemäßes Fahrzeug 10 dargestellt, welches eine erfindungsgemäße Vorrichtung 20 umfasst. Bei dieser Ausführungsform umfasst die erfindungsgemäße Vorrichtung 20 eine Steuerung 8, einen Sensor 9 (z.B. einen Radarsensor), eine Warneinrichtung 40 und ein Spurwechselassistenzsystem 41.

### Bezugszeichenliste

- 1: Fahrspur
- 2: weiteres Fahrzeug
- 3: Erfassungsbereich
- 4: Sensorreichweite
- 5: Abstand
- 6, 6': virtuelles Fahrzeug
- 7: Geschwindigkeit des virtuellen Fahrzeugs
- 8: Steuermittel
- 9: Sensor
- 10: Fahrzeug
- 11: Geschwindigkeit des Fahrzeugs
- 12: Kontur des Erfassungsbereichs
- 13: Geschwindigkeit des weiteren Fahrzeugs
- 15: zulässige Höchstgeschwindigkeit
- 16: Sicherheitsaufschlag
- 20: Vorrichtung
- 21: Mittellinie
- 22: Schnittpunkt
- 30: Zustand
- 40: Warneinrichtung
- 41: Spurwechselassistenzsystem

## Patentansprüche

1. Verfahren zum Bestimmen eines Zustands (30) eines Fahrzeugs (10),
wobei das Fahrzeug (10) einen Sensor (9) zum Erfassen eines weiteren Fahrzeugs (2) umfasst,
wobei das Verfahren folgende Schritte umfasst:
Bestimmen einer Geschwindigkeit (11) des Fahrzeugs (10), und
Bestimmen des Zustands (30) abhängig von einer Reichweite (4) des Sensors (9) und der Geschwindigkeit (11),
wobei der Zustand (30) des Fahrzeugs zumindest einen von folgenden Werten annimmt:
• kritisch, und
• unkritisch, und
wobei im Zustand kritisch ein Zusammenstoß mit einem vor oder nach dem Fahrzeug (10) fahrenden weiteren Fahrzeug (2) wahrscheinlicher ist als im Zustand unkritisch.

2. Verfahren nach Anspruch 1,
**dadurch gekennzeichnet,**
**dass** Messwerte des Sensors (9) ausgewertet werden, und
**dass** der Zustand (30) nur dann abhängig von der Reichweite (4) bestimmt wird, wenn abhängig von den ausgewerteten Messwerten kein weiteres Fahrzeug (2) vor bzw. hinter dem Fahrzeug (10) erfasst wird.

3. Verfahren nach einem der vorhergehenden Ansprüche,
**dadurch gekennzeichnet,**
**dass** die Reichweite des Sensors (9) bestimmt wird.

4. Verfahren nach Anspruch 3,
**dadurch gekennzeichnet,**
**dass** die Reichweite abhängig von einer Kontur (12) eines Erfassungsbereichs (3) des Sensors (9) bestimmt wird, indem für jede Fahrspur (1) einer von dem Fahrzeug (10) befahrenen Straße, auf welcher in derselben Richtung wie das Fahrzeug (10) gefahren wird, jeweils ein Schnittpunkt vor und ein Schnittpunkt (22) nach dem Fahrzeug (10) bestimmt wird, in welchem sich eine Mittellinie (21) der Fahrspur (1) mit der Kontur (12) des Erfassungsbereichs (3) schneidet, und
**dass** die Reichweite (4) als ein Abstand zwischen dem Fahrzeug (10) und dem jeweiligen Schnittpunkt (22) bestimmt wird.

5. Verfahren nach einem der vorhergehenden Ansprüche,
**dadurch gekennzeichnet,**
**dass** der Zustand (30) zusätzlich abhängig von einer Mindestgeschwindigkeit einer von dem Fahrzeug (10) befahrenen Straße bestimmt wird.

6. Verfahren nach einem der vorhergehenden Ansprüche,
**dadurch gekennzeichnet,**
**dass** der Zustand (30) zusätzlich abhängig von einer zulässigen Höchstgeschwindigkeit (15) einer von dem Fahrzeug (10) befahrenen Straße bestimmt wird.

7. Verfahren nach Anspruch 6,
**dadurch gekennzeichnet,**
**dass** angenommen wird, dass sich in einem Abstand, welcher der Reichweite (4) des Sensors (9) entspricht, hinter dem Fahrzeug (10) ein virtuelles Fahrzeug (6) befindet, welches mit der zulässigen Höchstgeschwindigkeit (15) fährt,
**dass** abhängig von der zulässigen Höchstgeschwindigkeit (15), von der Geschwindigkeit (11) des Fahrzeugs (10) und der Reichweite (4) des Sensors (9) berechnet wird, ob das virtuelle Fahrzeug (6) einen vorbestimmten Mindestabstand zu dem Fahrzeug (10) unterschreiten wird, und
**dass** der Zustand (30) als kritisch bestimmt wird, wenn berechnet wird, dass das virtuelle Fahrzeug (6) den vorbestimmten Mindestabstand unterschreitet.

8. Verfahren nach einem der vorhergehenden Ansprüche,
**dadurch gekennzeichnet,**
**dass** mit dem Sensor (9) ein weiteres Fahrzeug (2) sowie ein Abstand (5) zwischen dem Fahrzeug (10) und dem weiteren Fahrzeug (2) und eine Geschwindigkeit (13) des weiteren Fahrzeugs (2) erfasst werden, und
**dass** der Zustand (30) abhängig von der Geschwindigkeit (11) des Fahrzeugs (10), von der Geschwindigkeit (13) des weiteren Fahrzeugs (2) und von dem Abstand (5) bestimmt wird.

9. Verfahren zur Unterstützung eines Fahrers beim Führen eines Fahrzeugs (10), wobei ein Zustand (30) des Fahrzeugs (10) mit dem Verfahren nach einem der Ansprüche 1-8 bestimmt wird und wobei die Unterstützung des Fahrers abhängig von dem Zustand (30) des Fahrzeugs (10) durchgeführt wird.

10. Vorrichtung zur Bestimmung eines Zustands (30) eines Fahrzeugs (10),
wobei die Vorrichtung (20) einen Sensor (9) zum Erfassen eines weiteren Fahrzeugs (2) und Steuermittel (8) umfasst,
wobei die Steuermittel (8) ausgestaltet sind, um eine Geschwindigkeit (11) des Fahrzeugs (10) zu bestimmen, und
wobei die Steuermittel (8) ausgestaltet sind, um den Zustand (30) abhängig von einer Reichweite (4) des Sensors (9) und der Geschwindigkeit (11) zu bestimmen,
wobei der Zustand (30) des Fahrzeugs zumindest einen von folgenden Werten annimmt:
• kritisch, und
• unkritisch, und
wobei im Zustand kritisch ein Zusammenstoß mit einem vor oder nach dem Fahrzeug (10) fahrenden weiteren Fahrzeug (2) wahrscheinlicher ist als im Zustand unkritisch.

11. Vorrichtung nach Anspruch 10,
**dadurch gekennzeichnet,**
**dass** die Vorrichtung (20) zur Durchführung des Verfahrens nach einem der Ansprüche 1-9 ausgestaltet ist.

12. Fahrzeug mit einer Vorrichtung (20) nach Anspruch 10 oder 11.

## Claims

1. Method for determining a state (30) of a vehicle (10),
wherein the vehicle (10) comprises a sensor (9) for detecting a further vehicle (2),
wherein the method comprises the following steps:
determining a speed (11) of the vehicle (10), and
determining the state (30) depending on a range (4) of the sensor (9) and
the speed (11),
wherein the state (30) of the vehicle assumes at least one of the following values:
• critical, and
• non-critical, and
wherein, in the critical state, a collision with a further vehicle (2) travelling ahead of or behind the vehicle (10) is more likely than in the non-critical state.

2. Method according to Claim 1,
**characterized in that**
measured values of the sensor (9) are evaluated, and
the state (30) is determined depending on the range (4) only when, depending on the evaluated measured values, no further vehicle (2) is detected ahead of or behind the vehicle (10).

3. Method according to any one of the preceding claims, **characterized in that**
the range of the sensor (9) is determined.

4. Method according to Claim 3,
**characterized in that**
the range is determined depending on a contour (12) of a detection area (3) of the sensor (9), **in that** an intersection point ahead of and an intersection point (22) behind the vehicle (10) is respectively determined for each lane (1) of a road on which the vehicle (10) is traveling, on which road travel is taking place in the same direction as the vehicle (10), at which intersection point a centerline (21) of the lane (1) intersects with the contour (12) of the detection area (3), and
the range (4) is determined as a distance between the vehicle (10) and the respective intersection point (22).

5. Method according to any one of the preceding claims, **characterized in that**
the state (30) is additionally determined depending on a minimum speed of a road on which the vehicle (10) is traveling.

6. Method according to any one of the preceding claims, **characterized in that**
the state (30) is additionally determined depending on a permissible maximum speed (15) of a road on which the vehicle (10) is traveling.

7. Method according to Claim 6,
**characterized in that**
it is assumed that a virtual vehicle (6) is located behind the vehicle (10) at a distance corresponding to the range (4) of the sensor (9) and is traveling at the permissible maximum speed (15),
depending on the permissible maximum speed (15), the speed (11) of the vehicle (10), and the range (4) of the sensor (9), a calculation is made as to whether the virtual vehicle (6) will fall below a predetermined minimum distance from the vehicle (10), and
the state (30) is determined to be critical if it is calculated that the virtual vehicle (6) falls below the predetermined minimum distance.

8. Method according to any one of the preceding claims, **characterized in that**
a further vehicle (2), and a distance (5) between the vehicle (10) and the further vehicle (2), and a speed (13) of the further vehicle (2), are detected by means of the sensor (9), and
the state (30) is determined depending on the speed (11) of the vehicle (10), the speed (13) of the further vehicle (2), and the distance (5).

9. Method for assisting a driver in driving a vehicle (10),
wherein a state (30) of the vehicle (10) is determined with the method according to any one of Claims 1-8, and wherein the assistance to the driver is implemented depending on the state (30) of the vehicle (10).

10. Device for determining a state (30) of a vehicle (10),
wherein the device (20) comprises a sensor (9) for detecting a further vehicle (2), and control means (8),
wherein the control means (8) are designed to determine a speed (11) of the vehicle (10), and
wherein the control means (8) are configured to determine the state (30) depending on a range (4) of the sensor (9) and the speed (11), wherein the state (30) of the vehicle assumes at least one of the following values:
• critical, and
• non-critical, and
wherein, in the critical state, a collision with a further vehicle (2) travelling ahead of or behind the vehicle (10) is more likely than in the non-critical state.

11. Device according to Claim 10,
**characterized in that**
the device (20) is designed to implement the method according to any one of Claims 1-9.

12. Vehicle with a device (20) according to Claim 10 or 11.

## Revendications

1. Procédé de détermination d'un état (30) d'un véhicule (10),
le véhicule (10) comprenant un capteur (9) destiné à détecter un autre véhicule (2),
le procédé comprenant les étapes suivantes :
détermination d'une vitesse (11) du véhicule (10) et
détermination de l'état (30) en fonction d'une portée (4) du capteur (9) et de la vitesse (11),
l'état (30) du véhicule prenant au moins une des valeurs suivantes :
• critique et
• non critique et
dans lequel, dans l'état critique, une collision avec un autre véhicule (2) roulant devant ou derrière le véhicule (10) est plus probable que dans l'état non critique.

2. Procédé selon la revendication 1,
**caractérisé en ce**
**que** des valeurs de mesure du capteur (9) sont évaluées et
**en ce que** l'état (30) est déterminé en fonction de la portée (4) uniquement quand, en fonction des valeurs de mesure évaluées, aucun autre véhicule (2) n'est détecté devant ou derrière le véhicule (10).

3. Procédé selon l'une quelconque des revendications précédentes, **caractérisé en ce**
**que** la portée du capteur (9) est déterminée.

4. Procédé selon la revendication 3,
**caractérisé en ce**
**que** la portée est déterminée en fonction d'un contour (12) d'un champ de détection (3) du capteur (9), en déterminant, pour chaque voie de circulation (1) d'une route parcourue par le véhicule (10), sur laquelle la circulation se fait dans la même direction que le véhicule (10), respectivement un point d'intersection avant et un point d'intersection (22) après le véhicule (10), au niveau duquel une ligne médiane (21) de la voie de circulation (1) se croise avec le contour (12) du champ de détection (3) et
**en ce que** la portée (4) est déterminée en tant que distance entre le véhicule (10) et le point d'intersection (22) respectif.

5. Procédé selon l'une quelconque des revendications précédentes, **caractérisé en ce**
**que** l'état (30) est déterminé en plus en fonction d'une vitesse minimale d'une route parcourue par le véhicule (10).

6. Procédé selon l'une quelconque des revendications précédentes, **caractérisé en ce**
**que** l'état (30) est déterminé en plus en fonction d'une vitesse maximale autorisée (15) d'une route parcourue par le véhicule (10).

7. Procédé selon la revendication 6,
**caractérisé en ce**
**que** l'on suppose que, à une distance qui correspond à la portée (4) du capteur (9), un véhicule virtuel (6) qui roule à la vitesse maximale autorisée (15) se trouve derrière le véhicule (10),
**en ce que,** en fonction de la vitesse maximale autorisée (15), de la vitesse (11) du véhicule (10) et de la portée (4) du capteur (9), il est calculé si le véhicule virtuel (6) va passer à une distance inférieure à une distance minimale prédéterminée par rapport au véhicule (10) et
**en ce que** l'état (30) est déterminé comme critique quand il est calculé que le véhicule virtuel (6) passe à une distance inférieure à la distance minimale prédéterminée.

8. Procédé selon l'une quelconque des revendications précédentes,
**caractérisé en ce**
**que,** avec le capteur (9), un autre véhicule (2) ainsi qu'une distance (5) entre le véhicule (10) et l'autre véhicule (2) et une vitesse (13) de l'autre véhicule (2) sont détectés et
**en ce que** l'état (30) est déterminé en fonction de la vitesse (11) du véhicule (10), de la vitesse (13) de l'autre véhicule (2) et de la distance (5).

9. Procédé d'assistance au conducteur pour la conduite d'un véhicule (10),
dans lequel un état (30) du véhicule (10) est déterminé par le procédé selon l'une quelconque des revendications 1 à 8 et dans lequel l'assistance du conducteur est effectuée en fonction de l'état (30) du véhicule (10).

10. Dispositif de détermination d'un état (30) d'un véhicule (10),
le dispositif (20) comprenant un capteur (9) destiné à détecter un autre véhicule (2) et des moyens de commande (8),
les moyens de commande (8) étant conçus pour déterminer une vitesse (11) du véhicule (10) et
les moyens de commande (8) étant conçus pour déterminer l'état (30) en fonction d'une portée (4) du capteur (9) et de la vitesse (11),
l'état (30) du véhicule prenant au moins une des valeurs suivantes :
• critique et
• non critique et
dans lequel, dans l'état critique, une collision avec un autre véhicule (2) roulant devant ou derrière le véhicule (10) est plus probable que dans l'état non critique.

11. Dispositif selon la revendication 10,
**caractérisé en ce**
**que** le dispositif (20) est conçu pour exécuter le procédé selon l'une quelconque des revendications 1 à 9.

12. Véhicule comportant un dispositif (20) selon la revendication 10 ou 11.
